# EUROPEAN PATENT APPLICATION

(11) **EP 2 671 923 A1**
(43) Date of publication of application: **11.12.2013**
(21) Application number: 13170507.1
(22) Date of filing: 04.06.2013
(51) Int. Cl.: C08L 95/00, E01C 19/10

(54) **Bituminous conglomerates comprising substantially monogranular natural bituminous sands**

(30) Priority: 05.06.2012 IT MI20120976
(71) Applicant: Generalstrade S.p.A., 20030 Barlassina (Monza Brianza) (IT)
(72) Inventor: Fusi, Emanuele Gianmaria, 20030 Barlassina (Monza Brianza) (IT); Merzagora, Alessandra, 20030 Barlassina (Monza Brianza) (IT)
(74) Representative: Petruzziello, Aldo

(57) **Abstract**

A description is given of a bituminous conglomerate for road pavements in the construction of base layers and/or of connecting layers and/or of wearing courses, comprising natural bituminous sands substantially monogranular and free or freed from clay, in a mix with stone aggregates and fillers, preferably obtained by means of humidification of the mix comprising said natural bituminous sands, stone aggregates and fillers and subsequent heating in a drying drum (4) by means of a hot air flow.

## Description

The present invention relates to bituminous conglomerates for the construction of wearing courses, base or connecting layers of road pavements, preferably for surface wearing courses with good mechanical properties such as stability on site and resistance to deformability.

More particularly the present invention relates to these bituminous conglomerates comprising natural bituminous sands as is coming mainly from natural deposits in Albania, which are found to be formed by fine aggregates having uniform granulometric distribution (monogranular sands) and substantially free from clay (very fine aggregates) so as to require no operation of sieving in order to remove coarse and/or very fine aggregates which otherwise would modify the prefixed mix design.

Even more particularly the present invention relates to a process for preparing these bituminous conglomerates characterised by reduced atmospheric emissions.

Natural bituminous sands are substantially deposits of sand and clay, saturated with bitumen in the solid or semi-solid state. This type of sand is found mainly in Canada and Venezuela where there are vast deposits, even if deposits of smaller extent exist in Siberia, in the Urals and Utah.

These sands which have a content of bitumen even up to 50% are normally used in order to extract the bitumen from the same in order to convert it subsequently into oil.

The use of the aforesaid sands in applications different from the extraction of oil, for example in the construction of road pavements, is not in practice provided in the art since their high quantity of clay (fillers), which has instead to be substantially absent in the layers of road pavements, and their lack of granulometric homogeneity would make their use in bituminous conglomerates for road pavements technically and economically disadvantageous.

As is known a bituminous conglomerate is generally made up of a mix of aggregates (inert materials) of rocky stone materials such as sand, grout, fine grout and grit, of different particle size (granulometric distribution) and of fillers, which are all bound together through a binder of bituminous type and/or polymer type. The binder of bituminous type (bitumen) generally used in bituminous conglomerates is obtained from the refining of oil.

By working on the granulometric distribution of the various inert materials, on the quantity of the different types of inert material and on the quantity and quality of the bitumen it is possible to obtain a variety of appropriate mixes (mix design) suitable for responding to the different constructional needs of road pavements and for fulfilling the performances in service foreseen by the various construction specifications according to the type of layer and of pavement to be built.

In order to simplify the production phases of the preparation of a bituminous conglomerate and the relative production costs it is desirable to be able to use, in its production, natural aggregates already containing a binder naturally so as to avoid the addition of integration bitumen, saving at the same time on the overall costs and on the times of production of the bitumen deriving from the oil.

US 5728202 describes the use of bituminous sands of Utah in a mix with natural bitumen in the formation of an additive for bituminous conglomerates.

However very often these sands which have an uneven granulometric distribution have to be appropriately sieved in order to remove the rocks of larger dimensions which would alter the final performances, or be appropriately ground in order to reach a certain homogeneity in the typical granulometric distribution of fine aggregates which is required to them by any mix design.

Moreover, in general, in the preparation of the bituminous conglomerate, these sands, due to the nature and the quantity of the bitumen contained in them, require the addition of fresh bitumen in order to guarantee a cohesion between the aggregates.

The object of the present invention is that of providing a bituminous conglomerate for use as wearing course, base layer or connecting layer of road pavements which comprises natural bituminous materials having a uniform granulometry and composition which are suitable (mix design) for obtaining a granulometric range able to provide the performances required for the aforesaid end use by the various construction specifications of road pavements.

A further object is to provide such a bituminous conglomerate which does not need high additions of fresh bitumen, in particular which does not require it at all, in order to obtain the correct mix design able to fulfil the requirements of said construction specifications.

Yet another object is that of providing such a conglomerate which can be produced with a simple process, with low atmospheric emissions of harmful fumes and/or dust deriving from bituminous substances and which allows the legal limits regarding harmful emissions to be observed.

These objects are achieved by the bituminous conglomerate in accordance with the invention having the features listed in the appended independent claim 1.

Advantageous embodiments of the invention are disclosed by the dependent claims. The object of the present invention is bituminous conglomerates, preferably obtained with a process in accordance with the present invention, which are particularly advantageous when used in the construction of base layers and/or of connecting layers and/or of wearing courses for road pavements, said bituminous conglomerates comprising natural bituminous sands as is, generally coming from original deposits in Albania.

In particular the present bituminous conglomerate is obtained from the mixing, in appropriate quantities and according to granulometric specifications referred to the range of the mix obtained, of natural-origin bituminous sands and of inert materials, without requiring the addition of integration bitumen, given their strict proportioning with the other components of the conglomerate mix, thanks to the high quality, binding power and quantity of the bitumen contained naturally in said sands.

It should be noted that, contrarily to other known bituminous sands, the natural bituminous sands of Albania are characterised by an evident granulometric uniformity such as to be able to define them monogranular (uniformity of particle size, i.e. formed substantially only by grains having dimensions very similar one to the other) and by a substantial absence of clay (since the content of these very fine materials is low) so as to be able to be used as is without requiring sieving before their use in order to make their particle size more uniform.

In fact 99.5% of these sands pass through the 1 mm sieve and 5.7% pass through the 0.063 mm sieve.

More particularly said bituminous sands are fragmented into grains of particle size conforming to a granulometric curve given by the following sieves: sieves of 4 and 2 mm with 100% of passing material, sieve of 1 mm with 99.5% of passing material, sieve of 0.5 mm with 94.0% of passing material, sieve of 0.4 mm with 57.6% of passing material, sieve of 0.25 mm with 16.8% of passing material, sieve of 0.125 with 8.0% of passing material, sieve of 0.063 with 5.7% of passing material.

However, depending on the deposit of origin and/or place of mining, should the clay be present in such quantities as to make the abovementioned bituminous sands poorly suitable for the chosen mix design, they can be appropriately treated in order to free them of the clay and possibly from other elements considered contaminating for the manufacturing of the bituminous conglomerate.

The granulometric curve of the natural bituminous sands of Albania is given here for the sake of comprehensiveness, referred to the percentage passing through the UNI ISO 3310-1 and UNI ISO 3310-2 series of sieves.

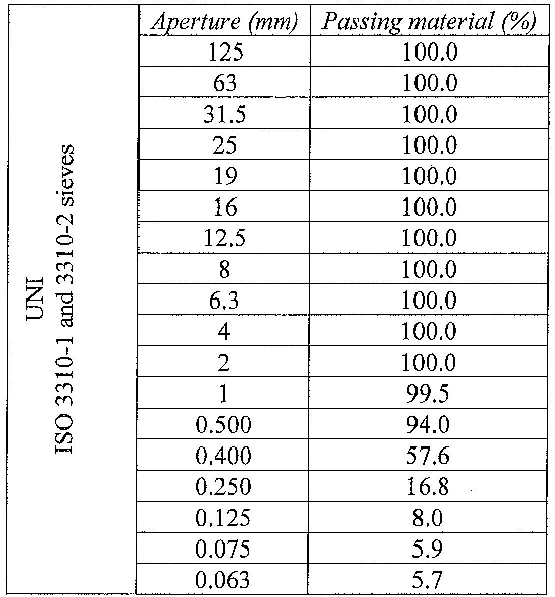

In practice said sands are provided with a specific granulometric distribution which defines exactly the percentage of each fraction thereof, i.e. the percentage of a given set of granules whose dimensions are comprised in a specific granulometric range. The content of bitumen in these sands varies depending on the deposit of origin and it is normally comprised between 1 and 50% of the total weight of the sand, generally equal to or lower than 30%, and/or in particular equal to or higher than 7%.

The Applicant has in fact carried out laboratory tests on the natural bituminous sands for the determination of the content of binder, a fundamental parameter for the purposes of subsequent calibration of the ideal mix design of the bituminous conglomerate.

The test for the determination of the content of binder of the bituminous sands was performed with the *Soxhlet method,* referring to the standard CNR BU 38/73, and has led to the identification of the following ranges which are representative of sands deriving from the Albanian deposits analysed.

| *Bitumen content (%)* | Bituminous sand |
|---|---|
| Referred to the aggregates (sand) | 8.00 - 30.00 |
| Referred to the mix (sand + bitumen) | 7.00 - 25.00 |

In particular the aforesaid test led to the determination of the following values, calculated as average among the values of the samples used in the phase of research and deriving from the Albanian deposits analysed.

| *Bitumen content (%)* | Bituminous sand |
|---|---|
| Referred to the aggregates (sand) | 8.00-15.00 |
| Referred to the mix (sand + bitumen) | 7.00-14.00 |

These sands preferably have a bitumen content of approximately 10-12%. The bituminous conglomerate of the present invention moreover provides for the use of the following aggregates or inert materials, preferably virgin inert materials
- Mineral additives or fillers (such as for example those coming from the grinding of calcareous rocks)
- Sand
- Grout
- Gravel

The term "aggregates" (normally used as synonym of "inert materials") is here intended to identify particle granular mineral materials, of various particle size (coarse, fine, very fine), used in road pavements constructions which can be natural or recycled from materials previously used in constructions.

"Virgin inert materials" is intended here to identify all the natural aggregates coming from a quarry and not from recycled or waste material.

As is known, the aggregates or inert materials for bituminous conglomerates are divided into very fine (fillers, clay), fine and coarse according to their granulometry: by way of example sand belongs to the group of fine aggregates, gravel/grout belongs to the group of coarse aggregates, just like also fine grout/grit (coarse).

These aggregates or inert materials make up the skeleton of the bituminous conglomerate whose cohesion is guaranteed by the bitumen: in the present conglomerate the cohesion is guaranteed essentially by only the bitumen contained in the present bituminous sands.

For the correct identification of these particle materials reference can be made to the standards on the subject of aggregates given in the various construction specifications, for example the standard CNR 139/92.

According to the end use (wearing course, base layer, connecting layer) of the bituminous conglomerate, the appropriate granulometry and quantity of the other aggregates different from the bituminous sands will be chosen in order to fulfil the various construction specifications.

For example the aggregates for the use in road pavements will be able to meet the requirements laid down by the standard UNI EN 13043:2004 "Aggregates for bituminous mixtures and surface treatments for roads, airfields and other trafficked areas" and comply with the specifications given in the respective standards for performance of the works provided by the contract specifications, such as for example the special contract specifications of the company Concessioni Autostradali Venete or the SITEB specifications.

Moreover according to the end use of the bituminous conglomerate (for wearing course, base layer or connecting layer) the quantity of the aggregates, such as filler, sand, grout, gravel and their weight ratios will be chosen appropriately in order to confer those features and performances foreseen by the end use on site of the bituminous conglomerate.

The bituminous conglomerate of the present invention is therefore the result of a strictly proportioned combination (mix design) of the aforementioned stone aggregates (coarse, fine, very fine), among which the bituminous sands are the decisive factor in order to obtain the technical and performance features that characterise the finished product, differentiating it from ordinary bituminous conglomerates.

The term "mix design" here is intended to identify the procedure of optimisation and control of the proportioninging and type of binder (for the bitumen), of the granulometry, angularity, shape, % of filler (for the aggregates), of the percentage of the spaces or porosity, features whereon the performances in service of the conglomerates depend strongly, therefore allowing mixes to be provided that are correct from the structural standpoint and, at the same time, compatible with the constructional needs.

In fact, in the present bituminous conglomerate, the quantity of sand and bitumen necessary for obtaining the specific mix design are provided substantially by the Albanian bituminous sands which are then mixed with the types of inert material of different granulometry from the fine materials and appropriate granulometric curve, in appropriate quantities according to the chosen end use of the present bituminous conglomerate.

Generally the quantity of these bituminous sands in the present bituminous conglomerate for road pavement is comprised between 10 and 75% by weight of the total aggregates (considered 100%), preferably in a quantity lower than or equal to 50%, according to the intended use of the conglomerate, above all in relation to the surface texture.

As mentioned, the mix of inert materials (stone aggregates) which constitutes the present bituminous conglomerate is not substantially added with additional bitumen of integration (unlike what takes place in the art) since that contained naturally in the sands is exploited, with respect to their strict proportioning in the mix, thanks also to the good quality of the bitumen contained in them.

In practice the optimal mix of inert materials and of bituminous sands allows advantageously the obtaining of a bituminous conglomerate without further contribution of bitumen while having the same technical and performance features of ordinary conglomerates, if not even improved.

It should be noted that, generally, the total content of bitumen in conventional bituminous conglomerates for wearing course is comprised between 3% and 7% of the weight of the stone materials (e.g. inert materials or aggregates): therefore in the case wherein the natural bituminous sands extracted were to have a content of bitumen below 7% (minimum value derived from the examination of various samples), it is possible to add such a quantity of bitumen (correction bitumen) as to reach the total value of bitumen established by the reference specifications and necessary for obtaining the specific mix design.

Additional bitumens must also meet the requirements laid down for example by the standard UNI EN 12591:2002 "Bitumens and bituminous binders - specifications for paving grade bitumens" and comply with the specifications given in the respective standards for performance of the works or other standards provided by the contract specifications, such as for example the special contract specifications of the company Concessioni Autostradali Venete (CAV) or the SITEB specifications.

What is expressed above in relation to correction bitumen can also obviously be applied to the bituminous conglomerates for base or connecting layers.

The present bituminous conglomerate, free from added or integration bitumen, was subjected to different tests in order to determine the technical and performance features thereof in order to evaluate observance of the various specifications for the various end applications, in particular for wearing courses.

The volumetric tests and tests of percentage determination of the residual spaces performed on the bituminous conglomerate of the present invention for wearing courses have supplied optimal results, with values around 4%, which are perfectly in line with those provided by the specific standards, typically in the order of 3-5% (CNR-BU 39/73).

Moreover by means of the traditional method with Marshall compaction the control of the production and compliance of the mixes with these specifications was carried out. More particularly the indirect tensile strength tests (according to the standard UNI EN 12697), which supply indications in terms of adhesion between bitumen and aggregates, performed on a bituminous conglomerate with a mix design for wearing course, and therefore more stringent with respect to those provided for the other layers, have shown a clear breakage through traction with aggregates completely intact along the same line of breakage.

This means that the mix is well assorted and such as to confer to the material a uniform cohesion: from the standpoint of behaviour on site the material will guarantee excellent performances as regards the resistance to the stresses induced by the passage of vehicles and the durability.

Moreover the average value of the indirect tensile strength, determined on specimens of the abovementioned mix for wearing course manufactured with rotary compactor with vertical pressure of 600kPa at the temperature of approximately 140°C, is equal to 1.07 MPa and is perfectly in line with the range of values equal to 0.7 - 1.1 MPa provided by the standards for wearing course.

The Marshall test, performed in observance of the standard UNI EN 12697 for the bituminous conglomerate for the wearing course defined above, and therefore referred to the more restrictive conditions to be met, has supplied the following values and was performed with the aim of checking the stability on site of the bituminous conglomerate, understood as resistance to deformability and indication of mechanical strength.

| *Bituminous conglomerate* | Specimen 1 | Specimen 2 | Specimen 3 | Specimen 4 | *Average value* |
|---|---|---|---|---|---|
| Stability (kN) | 14.3 | 16.5 | 14.7 | 14.0 | 14.9 |
| Creep (mm) | 2.4 | 2.5 | 2.3 | 2.4 | 2.4 |
| Rigidity (kN/mm) | 5.9 | 6.5 | 6.3 | 5.8 | 6.1 |
| Apparent density (kg/m³) | 2256 | 2266 | 2267 | 2261 | 2263 |

It should be noted that bituminous conglomerates are generally accepted for wearing course when the following minimum values are reached:

| | CAV specifications | SITEB specifications |
|---|---|---|
| Stability (kN) | ≥ 12 | > 12 |
| Rigidity (kN/mm) | > 3 | 3.5-5 |

It is therefore evident that the average values of stability and rigidity of the present conglomerate for wearing course have been found to be improved with respect to the minimum values of known bituminous conglomerates for wearing courses.

The bituminous conglomerate of the present invention is therefore found to be particularly high performance for surface wearing courses, and consequently also for the other layers, meeting the more restrictive conditions relating to the surface wearing course, with respect to the physical and mechanical features presented above.

The value and the quality of this bituminous conglomerate consists moreover in the fact that a substantial addition of bitumen is not found to be necessary, in that the natural bitumen present in the Albanian bituminous sands is exploited and optimised, and appropriately deprived from clay, should the latter be present, and from other substances considered contaminating for the use of the present invention.

It is in any case understood that the present bituminous conglomerate may also contain other additives normally used in the art such as polymer binders, mineral fibres, modified bitumen and the like according to the end use.

Moreover the present bituminous conglomerate may also contain appropriate quantities of millings in addition to the abovementioned bituminous sands.

"Millings" here is understood to identify a recycled material deriving from the crushing in blocks or from the milling of the asphalt performed during maintenance of the roads when a layer of asphalt is removed to then proceed with repaving.

This milled asphalt tendentially has a granulometric curve characterised by a high percentage of fine materials and contains aged bitumen: therefore the use of this millings are generally in place of a portion of sand and bitumen or of bituminous sand used for a specific mix design.

The following can be listed as typical compositions of bituminous conglomerates in accordance with the present invention:

| A) wearing courses | |
|---|---|
| - Mineral additives or fillers | 0-3% |
| - Sand | 0-20% |
| - Bituminous sand | 10-75% |
| - Grout | 0-20% |
| - Gravel | 0-30% |
| - total bitumen | 4-6% (of which 0-2% correction) |

| B) base layer | |
|---|---|
| - Mineral additives or fillers | 0-3% |
| - Sand | 0% |
| - Bituminous sand | 10-75% |
| - Grout | 20-40% |
| - Gravel | 30-50% |
| - total bitumen | 4-5% (of which 0-1% correction). |

The present bituminous conglomerate can be obtained by blending the various components according to known methods in known systems where the various ingredients are mixed with heat (e.g. 180°C approximately).

Generally, in these known systems the stone aggregates, after having been sieved, divided into appropriate granulometric classes (coarse, fine, very fine) and proportioned, are subsequently dried together in a rotating drying drum heated with a direct flame by a burner and subsequently blended with bitumen in the appropriate mixing section placed downstream of the aforesaid drying drum.

The Applicant has instead found that thanks to the use of the present monogranular Albanian bituminous sands it is possible not to use bitumens (in order to make the aggregates cohere one with the other) when the Albanian sands are added to the other aggregates different from said sands (coarse, very fine) in the section of hot mixing, in quantities provided by the chosen mix design. In this way the bituminous sands do not enter the drying drum but are fed into the mixer at ambient temperature, and here are heated according to the principle of the transmission of heat between bodies, thanks to the direct contact with the other inert materials/aggregates already heated by the flame of the burner of the drying drum, thus forming a mix (mix design) which exits from the mixer at a temperature of at least 100°C, preferably at least 120°C, more preferably 150°-160°C.

In the preparation of the present bituminous conglomerate in known systems the bituminous sands are therefore fed, instead of to the drying drum, to the subsequent section of blending (mixer) placed downstream of the drying drum wherein the addition of the bitumen normally takes place, even if it is possible to feed these sands in different ways according to the features of the known system used.

It is in fact also possible to feed a part of said sands (or the whole quantity provided by the mix design) in the final portion of the dryer intended for the insertion of the recycled materials (at the ring found on the drying drum in proximity of the exit of the aggregates from said drying drum) where they are heated, according to the principle of the transmission of heat between bodies, by the direct contact with the other inert materials/aggregates (stone aggregates different from said sands) already heated by the flame of the burner of the drying drum, said mix of aggregates containing the bituminous sands exiting the dryer at a temperature of at least 100°C, preferably at least 120°C, more preferably 150°-160°C.

The conglomerate obtained is then transferred and subsequently transported as far as the place of laying, maintaining the mix at a temperature suitable for processing.

Its spreading or laying takes place by means of vibratory finishing machines according to techniques known in the art of road pavement constructions.

The Applicant has moreover found that it is also possible to avoid the use of addition bitumen when the bituminous sands are fed together with the other inert materials at the entry of the drying drum making however a change to the processes and to the systems known for the production of bituminous conglomerates, in particular by humidifying the aggregate mix (also containing the bituminous sands) before sending it to the drying drum and heating this humidified mix through the direct contact with hot air rather than direct contact of the aggregates with the flame of the burner.

In fact the Applicant has found that it is possible to obtain the present bituminous conglomerate by using a process developed by the Applicant which has exhibited particular advantages not only in the observance of the standards on emissions into the atmosphere with respect to traditional systems where the burner is positioned in proximity of the drying drum; but also advantages in terms of final performances of the present conglomerate with respect to the same obtained with known traditional methods.

The present method consists of manufacturing the present bituminous conglomerate which comprises a mix of inert materials constituted by natural bituminous sands extracted from original deposits in Albania and substantially free from clay, stone aggregates different from said sands and fillers, by means of direct heating of the abovementioned mix, which has been previously wetted with sprays of water, using for the heating a flow of hot air at high temperature, rather than the direct contact with the naked flame of the burners: in this way it is possible to ensure the maintaining of the quality and performance features of the quality bitumen of the bituminous sands, when fed into the drying drum, in addition to the observance of the minimum levels of the emissions generated by the process.

More particularly the observance of the minimum levels of the emissions generated by the process is guaranteed by the fact that this process also provides a phase of fumes treatment by means of their passage in a series of apparatuses of abatement/filtering and their recycling, after this treatment, inside one of the apparatuses of abatement/filtering before being discharged into the atmosphere.

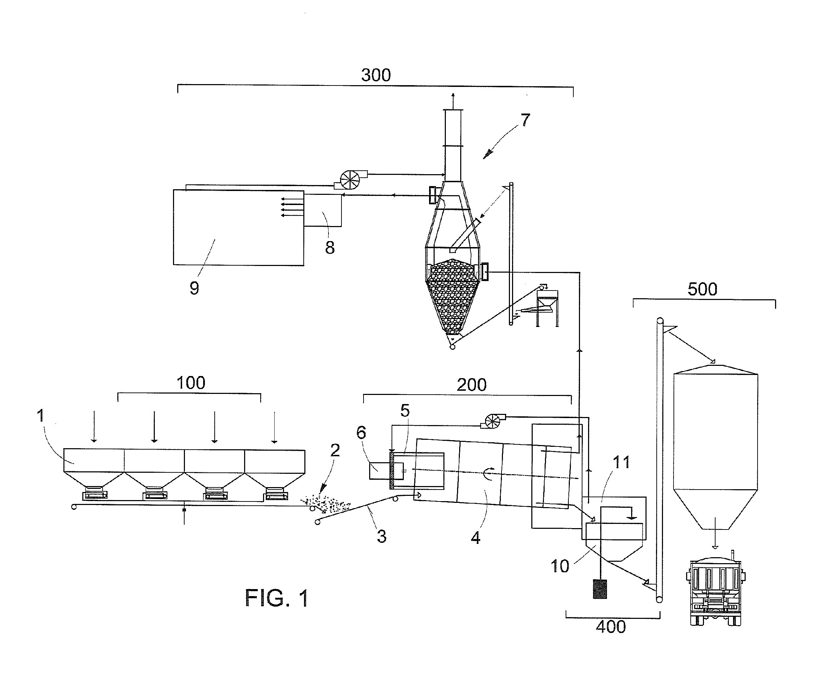

This process is carried out in an appropriate system which will be described herein below with reference to the simplified system diagram illustrated in Figure 1 (attached to the present Application).

More particularly the process developed by the Applicant is characterised by the following steps:
a) humidification and/or wetting of a mix of inert materials 2, previously prepared and containing the bituminous sands, and feeding of said humidified mix to a rotating drying drum 4. This humidification takes place in a section 100 of a system by means of nozzles for the humidification which spray water (injection of jets of water) over the mix 2 placed on a conveyor belt 3 upstream of said drying drum 4.
b) Heating of said mix of humidified inert materials placed inside the rotating cylinder 4, by means of direct contact with a flow of hot air, at a temperature of at least 200°C, preferably 250-300°C, which is fed inside said rotating cylinder 4 through a special conduit 5, insulated thermally, for conveying the heat. Said hot air is heated by a burner 6 positioned upstream of this rotating cylinder 4, and of said conduit 5, and in a back manner with respect to said rotating cylinder 4 in such a way that said humidified mix is not in direct contact with the flames of said burner (6).
c) Filtering/abatement of the aspirated fumes and dust exiting from said rotating cylinder 4 by means of a first abater or filtering chamber 7 with filtering granular inert materials through filtration in volume, monolayer or multilayer, and subsequent further filtering by means of a pre-filter with steel sponges 8, both placed upstream of a conventional bag filter 9. The fumes exiting said bag filter 9, which have lost many of the contaminants, are then recycled in said abater 7 before being discharged into the atmosphere.
d) Optional addition of fresh bitumen to said mix of dried inert materials, exiting said drying drum 4, and/or optional feeding of a portion of bituminous sands, in a mixer 10 placed under aspiration and having a temperature of at least 100°C, preferably at least 120°C, more preferably 150°-160°C, in order to obtain the bituminous conglomerate required.
e) Subsequent re-feeding of the fumes aspirated by said mixer 10 during said phase d) into said burner 6 in order to obtain further abatement of residues, in particular of those of bituminous origin or in the line of fumes aspiration exiting from the dryer 4 connected to said abater or filtering chamber 7.

The mix of inert materials 2 to be subjected to the present process is prepared previously before performing step a) in the section 100 of the system.

This preparation consists of dividing the aggregates or inert materials into appropriate granulometric classes and of proportioning them appropriately according to the mix design adopted.

This operation takes place by means of hoppers 1 provided with feeding screw conveyors which discharge the respective aggregates, including the bituminous sands, onto a conveyor belt 3 which goes to feed said drying drum 4.

It is understood that it is also possible to feed the bituminous sands simultaneously in several fractions in the points of addition or of feeding indicated above (section 100, section 400, terminal end of the drying drum).

As regards step a), it was found, on the basis of the tests carried out, that the humidification of the stone material through a mist of vaporised water, before it enters the production cycle, is found to be an optimal solution in order to avoid excessive drying of the mix of aggregates when containing bitumen, and the formation of surface encrustations inside the drying drum 4 due to the excessively dried bitumen.

This phase of humidification is absent in the known processes of preparation of known bituminous conglomerates.

As regards the step b) of heating with hot air which takes place in a section of system denoted by reference numeral 200, it was ascertained that the backward position of the burner 6 with respect to the drying drum 4 allows the direct contact of the material with the flame to be avoided when the material is fed into the same cylinder 4. In this case the direct flame is prevented from altering the chemical and physical properties of the bitumen contained in the sands, thereby the technical and performance ones of the finished product are jeopardised.

The change made by the Applicant with respect to the known systems consists therefore in providing the positioning of a connection piping 5 between the burner 6 and the rotating cylinder 4, which piping is insulated and appropriately dimensioned so as not to disperse heat.

The configuration of the piping 5, particularly at its ends, allows the flame to be broken, and to collect and convey all the heat inside the drying drum 4 in the form of a flow of hot air at high temperature. This hot air flow allows the material transiting inside the drying drum 4 to heat in a uniform manner, without jeopardising the quality features thereof, in particular those of the quality bitumen present in the bituminous sands when fed only to the drying drum 4.

The feeding of the mix of inert materials and the direction of the heated air flow at the inlet of the dryer are preferably in equicurrent.

As regards step c) of abatement/filtering of the dust and fumes aspirated by the drying drum containing humidity, it takes place in a section of system denoted by reference numeral 300 where the dust/fumes exiting the rotating cylinder 4 are conveyed, before arriving at the bag filter 9, in an inert material filter 7 with the function of retaining the suspended dust fractions and the possible other impurities and subsequently in a pre-filter with steel sponges 8, specially dimensioned for the capture of the coarser fractions of inert materials and possibly containing residues of bitumen.

These filters 7 and 8 are not provided in known systems.

In a preferred embodiment along the fumes line at the inlet and at the outlet of said abater/filter 7 an injection of active carbons and calcium hydroxide is provided for a more efficient abatement of the volatile compounds, such as IPA, which are contained in the fumes generated in the system during the various heating operations.

The use of a bag filter 9, as instrument of final abatement on this line of discharge of fumes into the atmosphere, remains unchanged with respect to the known systems in that inside the smaller particles are collected which have remained in suspension in the current of air exiting from the pre-filter 8. In the bag filter 9 the recovery also takes place of this dust which is re-fed into the production cycle, as filler, in the mixer 10 (line not illustrated in the drawing).

The very fine dust and/or the fumes exiting the bag filter 9 are also conveyed inside the abater/filter 7 (e.g. by means of an aspirator) so as to reduce further the contaminants and the dust in said fumes before being discharged in the atmosphere.

As regards step d) of optional mixing between the inert materials and the additional bitumen, and optionally with the bituminous sands or with a portion thereof, it should be noted that this step takes place in a specific section of the present system, denoted by reference numeral 400, wherein step e) of fumes recovery also takes place.

Said step e) of recovery of the fumes from the mixer 10, be it of continuous type or discontinuous type, takes place through an airtight extractor hood 11 mounted on the mixer 10. The aspirated air is then conveyed and re-fed in front of the burner 6 in such a way as to obtain the complete abatement of possible residues and/or unburnt materials, in particular for those of bituminous origin.

This re-feeding in the burner 6 is not provided in known systems.

The bituminous conglomerate exiting the mixer 10 is then sent to a system section 500 for the storage of the finished product from where it will be taken for the successive transport into the road worksite.

It is understood that the abovementioned steps c) and/or e) of treatment of fumes coming from the drying drum 4 and/or from the mixer 10, as well as the addition of active carbons and calcium hydroxide, can be applied also to the known processes described above (e.g. direct contact with flame) without thereby departing from the scope of the present invention.

It should be noted that the present process is particularly advantageous in that it does not generate emissions of carbon and nitrogen oxides or TOC outside the law standard, since these compounds are recovered in full (all the fumes which are released in the process, including those generated possibly in the section 400 of mixing with fresh bitumen, are treated either by means of sending into the filtering section 300 and duly treated with various filtering means described above or re-sent to the burner) and re-fed into the production cycle so as to obtain the complete abatement of the volatile organic compounds thereof deriving from the use of bituminous substances, and the emission into the atmosphere of minimum levels of total dust (expressed in mg/Nmc), with respect to the limit value permitted by the standard, avoiding therefore all the environmental problems deriving from the manufacture of known bituminous conglomerates.

The Applicant has found that the bituminous conglomerate with bituminous sands obtained through the humidification and the direct heating with hot air at 200°C at least, preferably at least 250°C, confers improved features of cohesion and of processability, ensuring therefore optimal results in terms of rolling during laying and therefore of durability of the pavement, also in the absence of additional bitumen.

With the hot air heating it is possible in fact to enhance the features of the quality bitumen contained naturally in the bituminous sands and improve the behaviour of the mix, above all in relation to the adhesive and cohesive features of the mix (bituminous conglomerate).

The air heating ensures moreover, similarly to what occurs in the process of quenching of steel, the obtaining of a material with improved mechanical properties, with respect to the thermal stress undergone by the bitumen which by definition is a material characterised by thermal sensitivity.

The possible humidification of the bituminous sands makes it possible instead to heat these sands without any soiling of the drying drum, when these sands are fed completely at the entrance of this cylinder.

A further object of the present invention is constituted by a system for preparing bituminous conglomerates from a mix of inert materials comprising natural bituminous sands extracted from original deposits in Albania and substantially free from clay, and/or millings, stone aggregates different from said sands, fillers, said system comprising at least in series
- a section of humidification of said stone aggregates, fillers in a mix with said bituminous sands and/or millings, by means of spraying of water;
- a section of heating 200 comprising a drying drum 4 equipped with a burner 6 placed back and distant with respect to the entrance for the mix of aggregates;
- a section of mixing 400 of the aggregates and of optional addition of bitumen, placed downstream of said drying drum 4 and comprising at least one mixer 10 placed under aspiration;
- a section 300 for the treatment of the fumes formed by a plurality of fumes abatement/filtering devices comprising at least one abater or filtering chamber 7 with granular inert materials and/or a pre-filter with steel sponges 8 and/or a conventional bag filter 9;
- a line of resending of the fumes exiting said mixer 10 towards said burner 6 and/or towards said section of fumes treatment 300.

The present invention is not limited to the particular embodiments described previously and illustrated in the accompanying drawings, but instead numerous detail changes may be made thereto within the reach of the person skilled in the art, without thereby departing from the scope of the same invention, as defined in the appended claims.

## Claims

1. Process for preparing a bituminous conglomerate for constructing base layers and/or connecting layers and/or wearing courses of road pavements, comprising a mix of inert materials constituted by natural bituminous sands extracted from original deposits in Albania, substantially free from clay, stone aggregates different from said sands, and fillers, said process comprising
heating, in a drying drum (4) of a drying section (200), of a mix of coarse stone aggregates and fillers, optionally containing said natural Albanian bituminous sands, addition of said natural Albanian bituminous sands to said heated mix of aggregate, in a mixer (10) of a mixing section (400) placed downstream of said drying drum (4), said bituminous sands being heated by means of direct contact with the aggregates exiting said drying drum (4), said mix exiting from said mixing section (400) having a temperature of at least 100°C, preferably of 120°C, more preferably of 150-160°C.

2. Process according to claim 1 wherein said mix of aggregates is prepared before the phase of heating, in a section (100) upstream of said drying drum (4), by means of division of said aggregates in appropriate granulometric classes and subsequent proportioning of the same depending on the prefixed mix design.

3. Process according to claim 1 or 2 wherein, when the mix of stone aggregates entering the drying drum (4) contains also said natural Albanian bituminous sands, a humidification phase of said mix of aggregates containing said bituminous sands is provided by means of injection of water jets, before the heating phase.

4. Process according to claim 3 wherein said humidified mix is subsequently heated in the drying drum (4) by means of direct contact with hot air flow having a temperature of at least 200°C, preferably at least 250°C, heated by a burner (6) positioned upstream of said rotating cylinder (4) and backwards with respect to the entrance of said mix in such a way that said humidified mix is not heated through direct contact with the flames of said burner (6).

5. Process according to any one of the preceding claims wherein, after the phase of heating, said mix exiting from said drying drum (4) is added with integration bitumen and/or one or more additives normally used in the art such as polymer binders, mineral fibres, modified bitumen and the like depending on the end use (base layers, connecting layers or wearing courses), in said mixer (10), placed under aspiration, and at a temperature of at least 100°, preferably 120°C, more preferably 150-160°C.

6. Process according to any one of the preceding claims wherein said bituminous sands are added to said mix of stone aggregates upstream of said mixer (10) instead of inside said mixer (10), in the end portion of the drying drum (4) in proximity of the exit of the aggregates therefrom.

7. Process according to any one of the preceding claims wherein a portion of bituminous sand is replaced by millings, said millings being fed to the humidification section.

8. Process according to any one of the preceding claims wherein a fume treatment phase is provided in which the fumes aspirated from said mixer (10) are fed to said burner (6) and/or to a section (300) for the treatment of the fumes exiting from said drying drum (4) by means of the passage of said fumes in an abater or filtering chamber (7) with granular inert materials, in a pre-filter with steel sponges (8) and in a conventional bag filter (9) placed on a line of discharge of fumes into the atmosphere.

9. Process according to claim 8 wherein an injection of active carbons and calcium hydroxide is provided along the fumes line at the inlet and at the outlet of said abater (7).

10. Bituminous conglomerate obtained from the process as defined in any one of the preceding claims.

11. Bituminous conglomerate for constructing base layers and/or connecting layers and/or wearing courses of road pavements, comprising a mix of inert materials constituted essentially by
- natural bituminous sands extracted from original deposits in Albania, substantially free from clay,
- stone aggregates different from said sands, and
- fillers (very fine aggregate),
said mix being substantially free from integration bitumen.

12. Bituminous conglomerate according to claim 10 or 11 wherein said bituminous sands have a granulometric curve given by the following sieves: sieves of 4 and 2 mm with 100% of passing material, sieve of 1 mm with 99.5% of passing material, sieve of 0.5 mm with 94.0% of passing material, sieve of 0.4 mm with 57.6% of passing material, sieve of 0.25 mm with 16.8% of passing material, sieve of 0.125 mm with 8.0% of passing material, sieve of 0.063 mm with 5.7% of passing material.

13. Bituminous conglomerate according to any one of claims 10 to 12 wherein the quantity of these bituminous sands in the present bituminous conglomerate for road paving is comprised between 10 and 75% of the weight of the total aggregates, preferably in a quantity lower than or equal to 50%.

14. Bituminous conglomerate according to any one of the preceding claims 10 to 13 further comprising one or more additives normally used in the art such as polymer binders, mineral fibres, modified bitumen and the like according to the final use (base layers, connecting layers or wearing courses).

15. System for preparing bituminous conglomerates from a mix of inert materials comprising natural bituminous sands extracted from original deposits in Albania and substantially free from clay, and/or millings, stone aggregates different from said sands, fillers, said system comprising at least in series
- a section of humidification of said stone aggregates, fillers in admixture with said bituminous sands and/or millings, by means of spraying of water;
- a section of heating (200) comprising a drying drum (4) equipped with a burner (6) placed backwards and distant with respect to the entrance for the mix of aggregates;
- a section for hot mixing (400) of the aggregates and for optional bitumen addition, which is placed downstream of said drying drum (4) and comprising at least one mixer (10) placed under aspiration;
- a section (300) for the treatment of the fumes formed by a plurality of fumes abatement/filtering devices comprising at least one abater or filtering chamber (7) with granular inert materials and/or a pre-filter with steel sponges (8) and/or a conventional bag filter (9);
- a line of resending of the fumes exiting from said mixer (10) towards said burner (6) and/or towards said section of fumes treatment (300).
